## Europäisches Patentamt

## European Patent Office

## Office européen des brevets

(11) Veröffentlichungsnummer: **0 214 387**
**B1**

(12) **EUROPÄISCHE PATENTSCHRIFT**

(45) Veröffentlichungstag der Patentschrift:
**26.04.89**

(21) Anmeldenummer: **86108715.3**

(22) Anmeldetag: **26.06.86**

(51) Int. Cl.⁴: **B60B 33/04**

(54) **Federnde und schwenkbare Lenkrolle.**

(30) Priorität: **23.08.85 CH 3634/85**

(43) Veröffentlichungstag der Anmeldung:
**18.03.87 Patentblatt 87/12**

(45) Bekanntmachung des Hinweises auf die Patenterteilung:
**26.04.89 Patentblatt 89/17**

(84) Benannte Vertragsstaaten:
**AT BE CH DE FR GB IT LI NL SE**

(56) Entgegenhaltungen:
**US-A- 2 707 795**
**US-A- 2 885 720**
**US-A- 4 515 235**

(73) Patentinhaber: **JD-Technologie AG, c/o Gestinor Services AG Chamerstrasse 50, CH-6300 Zug(CH)**

(72) Erfinder: **Brändli, Max, Höhenweg 5,
CH-2553 Safnern(CH)**
Erfinder: **Feldmann, Hansueli, Paul Jenni Strasse 5,
CH-2553 Safnern(CH)**

(74) Vertreter: **Monsch, René et al, E. BLUM & CO.,
Patentanwälte Vorderberg 11, CH-8044 Zürich(CH)**

ACTORUM AG

**Beschreibung**

Die Erfindung betrifft eine federnde und schwenkbare, an einem Fahrzeug, insbesondere an einem fahrerlos geführten Flurförderfahrzeug, in der Fahrtrichtung vorn und hinten angeordnete Lenkrolle.

Alle Räder eines durch zwei in der Mitte des Fahrzeugkörpers befindlichen Antriebsräder angetriebenen fahrerlos geführten Flurförderfahrzeuges müssen stets mit dem Fussboden in festem Kontakt gehalten werden. Dies wird gewöhnlich durch mindestens ein mit dem Fahrzeugkörper federnd verbundenes Rad erreicht. Nur so ist gewährleistet, dass bei einem über eine unebene Fahrbahn geführten Fahrzeug entstehende Stösse absorbiert werden können und gleichzeitig alle Räder in einer festen Verbindung mit dem Fussboden bleiben und die Antriebsräder mit einer annähernd gleichen Kraft gegen den Fussboden drücken.

Damit solche Flurförderfahrzeuge problemlos und betriebssicher auch auf gewöhnlichen Industrieböden einsetzbar sind, sind federnde Lenkrollen mit möglichst grossem Federweg vorn und hinten notwendig. Solche Federungen werden dann meist mehrstufig ausgeführt, damit auch bei unbelasteten Fahrzeugen die Laufrollen jederzeit den Boden berühren und sich entsprechend der Fahrtrichtung ausrichten. Bei einem, beispielsweise durch eine auf ein Hindernis auffahrende Auffahrschutzvorrichtung ausgelösten Notstop bewegt sich das Fahrzeugoberteil mit der Last in der Fahrtrichtung weiter. Noch bevor die gebremsten Antriebsräder zum Stillstand kommen, kippt das Fahrzeug um die Achse der Antriebsräder nach vorn, die Federung der vorderen Lenkrollen wird maximal betätigt und der vordere Teil des Fahrzeuges taucht zusammen mit der Last nach unten. Ist die meistens aus Einzelpaketen oder Kartonschachteln bestehende und auf Paletten aufgeschichtete Last nicht sehr sorgfältig mit Gurten gesichert, fällt die vordere obere Lage der Pakete oder Schachteln vom Fahrzeug herunter.

Mit der DE-A 3 221 449 ist ein solches fahrerlos geführtes Fahrzeug mit schwenkbaren Freilaufrollen gemäß dem Oberbegriff des Anspruchs 1 bekanntgeworden, bei welchem eine zwischen den vorderen und hinteren Freilaufrollen und dem Fahrzeugkörper angeordnete Federung vorgesehen ist. Der Fahrzeugkörper ist in der Fahrtrichtung um die zwei mittig am Fahrzeugkörper angeordneten Antriebsräder kippbar. Die Kippbewegung wird durch je eine vordere und eine hintere Lenkrolle aufgenommen, welche über ein horizontales Hebelgestänge und einem in der Mitte des Fahrzeugkörpers von zwei Lagerplatten getragenen Lagerzapfen miteinander und mit dem Fahrzeugkörper schwenkbar verbunden und durch vertikal angeordnete Spiralfedern gegen den Fahrzeugkörper federnd abgestützt sind. Bei einer speziellen Ausführungsart dieser Erfindung ist der Fahrzeugkörper in vertikaler Richtung durch je eine in einer vorderen und einer hinteren Keilnabe durch Kugeln geführte Keilwelle verschiebbar gelagert und durch je ein Federpaket auf der zugehörigen Lenkrolle abgestützt. Vertikale durch Bodenunebenheiten hervorgerufene Bewegungen werden durch je eine Spiralfeder und zum Einschränken einer grösseren Winkelbewegung des Fahrzeugkörpers durch je eine zusätzliche Gummifeder mit einer grösseren Federkonstante aufgenommen.

Der Nachteil dieses Flurförderfahrzeuges liegt darin, dass es bei einer vollsymmetrischen Dämpfungs-Ausrüstung mit Spiralfedern und Gummifedern zwischen dem Fahrzeugkörper und den Lenkrollen in beiden möglichen Fahrtrichtungen ein starkes Kippen des Fahrzeugkörpers nach vorn zwar verhindert, sich aber deshalb wegen einer ungenügenden Gesamtfederung für den Einsatz auf einem normalen Industrieboden mit grösseren Unebenheiten nicht eignet.

Der Erfindung liegt die Aufgabe zugrunde, eine Lenkrolle vorzuschlagen, welche bei einem fahrerlos geführten Flurförderfahrzeug in beiden möglichen Fahrtrichtungen ein bei einem Halt mit grosser Verzögerung eintretendes starkes Kippen nach vorn verhindert und gleichzeitig eine genügende Gesamtfederung für den einwandfreien Einsatz auf einem Industrieboden mit grösseren Unebenheiten gewährleistet.

Die Aufgabe wird druch die in Anspruch 1 gekennzeichnete Erfindung gelöst. Zweckmäßige Ausgestaltungen der Erfindung sind Gegenstand der abhängigen Ansprüche. Die durch die Erfindung erreichten Vorteile sind im wesentlichen darin zu sehen, dass die Federung der stets in der Fahrtrichtung vorn liegenden federnden Lenkrolle (oder Lenkrollen) bei einem Halt mit grosser Verzögerung durch die Anschlageinrichtung blockiert wird, während bei der jeweils hinten liegengen Lenkrolle die volle Federwirkung ausnutzbar ist. Durch die erfindungsgemäss am nicht schwenkbaren Teil der Lenkrollen angebrachten Anschlagplatten und die am drehenden Teil der Lenkrollen angebrachten Anschlagschieber wird die Blockierung der Lenkrollenfederung über den Lenkwinkel der Rollen selbsttätig ein- und ausgeschaltet, wodurch das Fahrzeug vollsymmetrisch bleibt. Unabhängig von der Fahrtrichtung ist stets gewährleistet, dass die Fahrzeuge bei einem Halt mit grosser Verzögerung vorn nicht zu stark einfedern und keine Teile der Last abwerfen.

Auf beiliegenden Zeichnungen ist ein Ausführungsbeispiel der Erfindung dargestellt, das im folgenden näher erläutert wird. Es zeigen:

Fig. 1 eine Seitenansicht eines fahrerlos geführten Fahrzeuges,

Fig. 2 einen Grundriss des Fahrzeuges gemäss Fig. 1,

Fig. 3 einen Seitenriss einer schwenkbaren und federnden Lenkrolle des Fahrzeuges gemäss Fig. 1,

Fig. 4 eine Ansicht gegen die Rückseite einer in der Fahrtrichtung eingestellten vorderen Lenkrolle mit den miteinander in Wirkverbindung gebrachten Einzelteilen der Blockiervorrichtung für die Federung der Lenkrolle und

Fig. 5 einen Grundriss der Lenkrolle gemäss einem Schnitt A–A der Fig. 4.

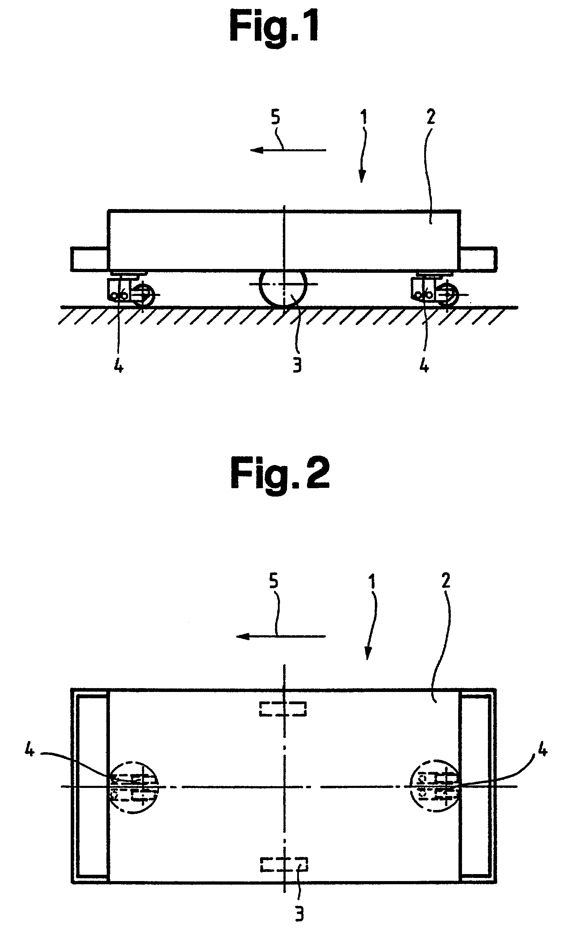

In den Fig. 1 und 2 ist mit 1 das fahrerlos geführte Fahrzeug bezeichnet. Am Fahrzeugkörper 2 sind in der Mitte zwei Antriebsräder 3 und vorne und hinten je mindestens eine Lenkrolle 4 angeordnet. Ein Pfeil 5 gibt die Fahrtrichtung des Fahrzeuges 1 an.

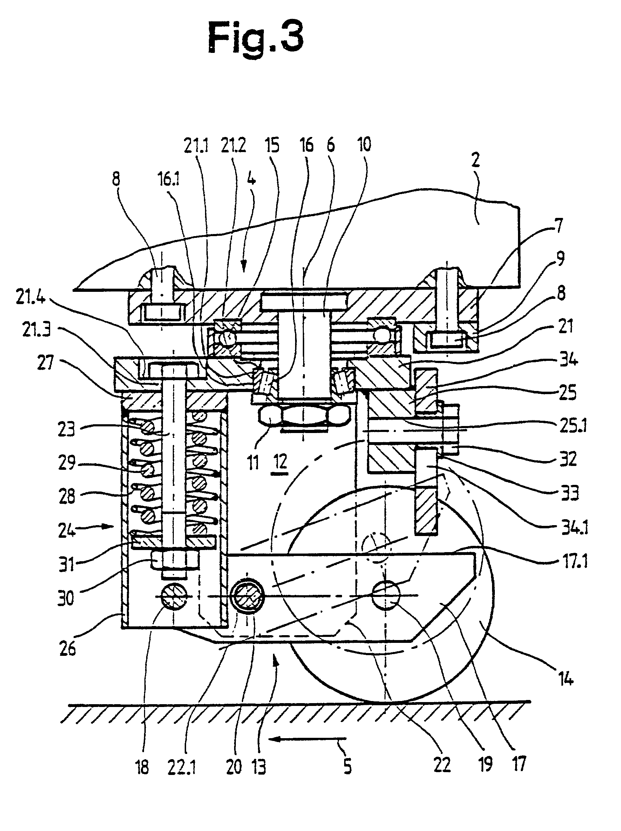

In Fig. 3 ist die Lenkrolle 4 vergrössert dargestellt. Die Lenkrolle 4 besteht aus einem fest mit dem Fahrzeugkörper 2 verbundenen Festteil und einem um eine vertikale Achse 6 um 360° schwenkbaren Schwenkteil. Der Festteil setzt sich aus einer Befestigungsplatte 7, aus Befestigungsschrauben 8, einem anschraubbaren Anschlagteil 9, einem Schwenkbolzen 10 und einer Mutter 11 zusammen. Der Schwenkteil besteht aus einem Rollenjoch 12 mit zwei auf je einem Kippbügel 13 drehbar gelagerten Laufrollen 14. Die mit den Befestigungsschrauben 8 am Fahrzeugkörper 2 festgemachte Befestigungsplatte 7 ruht auf einem vom Rollenjoch 12 getragenen Drucklager 15. Das Rollenjoch 12 ist durch ein Kegelrollenlager 16 auf dem Schwenkbolzen 10 drehbar gelagert. Mit der Mutter 11 werden das Kegelrollenlager 16, das Rollenjoch 12, das Drucklager 15 und die Befestigungsplatte 7 auf dem Schwenkbolzen 10 zusammengehalten. Das Rollenjoch 12 setzt sich aus einer horizontalen Tragplatte 21 und zwei seitlich an der horizontalen Tragplatte 21 vertikal nach unten gerichteten Tragschildern 22 zusammen. In der horizontalen Tragplatte 21 ist eine grosse Durchgangsbohrung 21.1 mit einer unteren Schulter 21.2 zur Aufnahme des Aussenrings 16.1 des Kegelrollenlagers 16 und zwei kleine Durchgangsbohrungen 21.3 mit je einer oberen Schulter 21.4 zur Aufnahme je einer Spannschraube 23 vorgesehen. In den Tragschildern 22 ist eine durchgehende horizontale Bohrung 22.1 zur Aufnahme einer Drehachse 20 angeordnet.

Auf dieser Drehachse 20 sind die beiden Kippbügel 13 kippbar gelagert. Jeder Kippbügel 13 besteht aus zwei zweiarmigen Hebeln 17 mit je drei Bohrungen und je einer Betätigungsnase 17.1, wobei die mittlere Bohrung auf der Drehachse 20 ruht. In einer der beiden Endbohrungen wird eine Drehachse 19 der Laufrolle 14 getragen und in der anderen Endbohrung ist ein als Gelenkverbindung zu einem Federpaket 24 dienender Gelenkbolzen 18 vorgesehen. Das Federpaket 24 weist ein mit einer Deckscheibe 27 einseitig abgeschlossenes Führungsrohr 26 und zwei im Führungsrohr aufgenommene gegenseitig gewickelte Druckfedern 28, 29 mit unterschiedlichen Federkonstanten auf, wobei das gegen unten offene Führungsrohr 26, zusammen mit den Druckfedern 28, 29 durch die Spannschraube 23 einen Federteller 31 und eine Mutter 30 an der horizontalen Tragplatte 21 des Rollenjochs 12 befestigt ist und das offene Ende des Führungsrohrs 26 mit dem Gelenkbolzen 18 des Kippbügels 13 verbunden ist. An der Tragplatte 21 des Rollenjochs 12 ist auf der den Federpaketen 24 entgegengesetzten Seite ein Halteblech 25 angeschweisst. Im Halteblech 25 ist ein Gewindeloch 25.1 vorgesehen. Eine in dieses Gewindeloch 25.1 eingedrehte Schraube 32 dient zur Halterung einer Gleit- und Distanzbüchse 33, auf welcher ein mit einem Längsschlitz 34.1 versehener Anschlagschieber 34 in vertikaler Richtung gleitend geführt ist.

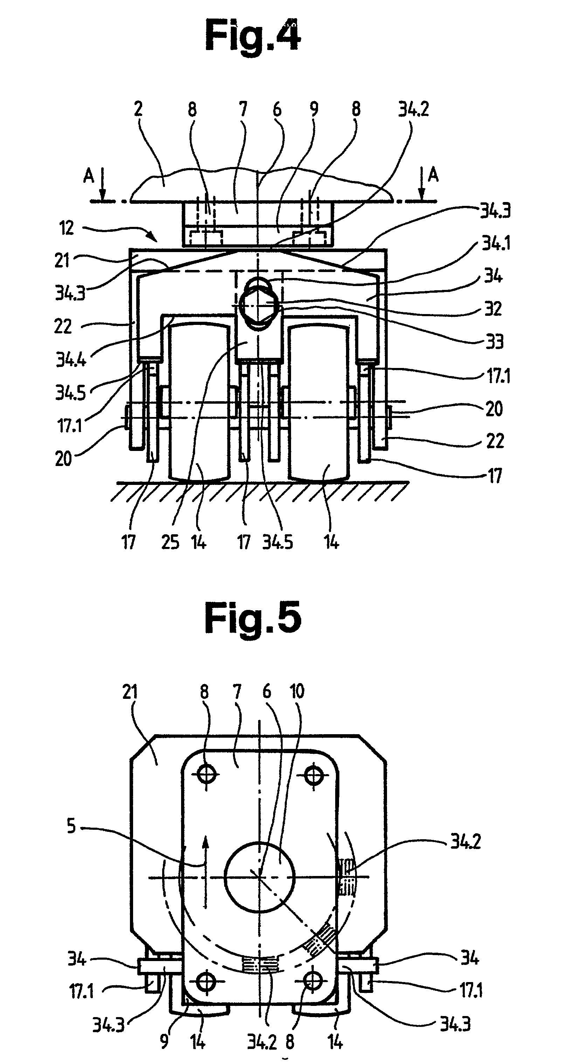

In den Fig. 4 und 5 ist der Anschlagschieber 34 im Aufriss und im Grundriss, sowie das Zusammenspiel des Anschlagschiebers 34 mit den Betätigungsnasen 17.1 der zweiarmigen Hebel 17 und mit der Anschlagplatte 9 ersichtlich. Der Anschlagschieber 34 ist auf der von der Schraube 32 gehaltenen Gleit- und Distanzbüchse 33 in vertikaler Richtung verschiebbar gelagert. Die Befestigungsplatte 7 und die Anschlagplatte 9 sind mit den Schrauben 8 am Fahrzeugkörper 2 befestigt. Das auf den Schwenkbolzen 10 gelagerte Rollenjoch 12 mit der horizontalen Tragplatte 21 und den vertikalen Tragschildern 22 ist um die vertikale Achse 6 um 360° schwenkbar. In den Schildern 22 des Rollenjochs 12 ist die Drehachse 20 gehalten, auf welcher die zweiarmigen Hebel 17 des Kippbügels kippbar gelagert sind. Der Anschlagschieber 34 weist eine zur vertikalen Mittelachse symmetrische Form mit einer oberen horizontalen Anschlagfläche 34.2 und zwei nach beiden Seiten schräg abfallenden Anschlagflächen 34.3 auf, sowie zwei über den Laufrollen 14 angeordnete Aussparungen 34.4 und drei untere, eine mittlere und zwei seitliche, Kontaktflächen 34.5. Die Fahrtrichtung des Transportwagens wird mit dem Pfeil 5 angezeigt.

Die vorstehend beschriebene Einrichtung arbeitet wie folgt: Die um 360° um die vertikale Achse 6 schwenkbaren Lenkrollen 4 des Fahrzeuges 1 stellen sich selbsttätig in der Fahrtrichtung ein, wobei die Federpakete 24 in der Fahrtrichtung vorn und die Anschlagschieber 34 hinten liegen. Beim Einfedern der Lenkrollen 4 durch Boden-Unebenheiten, oder beim Anfahren oder Anhalten, bewegt sich der Fahrzeugkörper 2 ab und auf, wobei der Kippbügel 13 um die mittlere Drehachse 20 kippt. Dabei wird abwechslungsweise das Federpaket 24 und der Anschlagschieber 34 betätigt. Beispielsweise drückt beim Wippen des Kippbügels 13 die aufsteigende Betätigungsnase 17.1 der zweiarmigen Hebel 17 der Kippbügel 13 auf die unteren Kontaktflächen 34.5 des Anschlagschiebers 34 und drücken den Anschalgschieber 34 nach oben. Bei diesem Einfedern der Lenkrollen 4 steht bei der Geradeausfahrt die obere horizontale Anschlagfläche 34.2 des Anschlagschiebers 34 an dem bei der vorderen Lenkrolle 4 in der Fahrtrichtung auf der hinteren Seite, zusammen mit der Befestigungsplatte 7 am Fahrzeugkörper 2 festgeschraubten Anschlagteil 9 an und die Federung der vorderen Lenkrolle 4 wird blockiert. Bei der Kurvenfahrt wird je nach der Winkellage der vorderen Lenkrolle eine der schrägen Anschlagflächen 34.3 des Anschlagschiebers 34 mit dem Anschlagteil 9 in Wirkverbindung treten, wobei grössere Federwege der vorderen Lenkrolle 4 als bei der Geradeausfahrt möglich sind. Durch diese schrägen Anschlagflächen 34.3 kann der Übergang von freifedernd bis anschlagend in Abhängigkeit der Winkellage der vorderen Lenkrolle 4 zur Längsachse des Fahrzeuges 1 kontinuierlich gestaltet werden. Bei der hinteren Lenkrolle 4 ist der Anschlagteil 9 in der Fahrtrichtung auf der vorderen Seite, zusammen mit der Befestigungsplatte 7 am Fahrzeugkörper 2 festgeschraubt. Bei dieser hinteren Lenkrolle ist die Blockiervorrichtung für die Federung somit wirkungslos und der gesamte Federweg der Lenkrolle ausnutzbar. Bei einem Notstop des Fahrzeuges federt die vordere Lenkrolle nur so weit ein, bis sich der Anschlagschieber 34 und die Anschlagplatte 9 berühren; die Federung blockiert, bevor ein Teil der Last abgeworfen wird. Der vertikale Bewegungsausgleich wird von der hinteren, nicht blockierten Lenkrolle 4 aufgenommen. Bei einem Fahrtrichtungswechsel drehen sich die Lenkrollen 4 selbsttätig um je 180°, wobei die jetzt vordere Lenkrolle 4 eine wirksame Blockiervorrichtung und die jetzt hintere Lenkrolle 4 die volle Federwirkung aufweist.

Zum gleichwertigen Ausgleichen von Terrainunebenheiten wird die jeweils hinten liegende Lenkrolle mit einem doppelten Federweg ausgerüstet, damit das Fahrzeug trotz eingeschränkter vorderer Federung die gleichen Unebenheiten überfahren kann wie bisher.

Anstelle des in der Figurenbeschreibung erwähnten und durch die Figuren dargestellten Ausführungsbeispieles einer federnden und schwenkbaren Lenkrolle mit zwei nebeneinander angeordneten Laufrollen wäre auch eine Lenkrolle mit nur einer Laufrolle denkbar.

Ebenso wäre es ohne weiteres möglich, anstelle je einer einzelnen Lenkrolle auf der Vorder- und auf der Hinterseite des Fahrzeuges je zwei voneinander unabhängige schwenkbare und federnde Lenkrollen vorzusehen, wobei jede Lenkrolle ebenfalls eine oder zwei nebeneinanderliegende Laufrollen aufweisen könnte.

## Patentansprüche

1. Federnde, an einem Fahrzeug (1), insbesondere einem fahrerlos geführten Flurförderfahrzeug, in Fahrtrichtung vorn und hinten angeordnete Lenkrolle (4), die um eine vertikale Achse (6) schwenkbar gelagert ist, wobei ihre Winkelposition von der Fahrtrichtung des Fahrzeuges (1) abhängig ist, dadurch gekennzeichnet, dass an der Lenkrolle (4) eine selbsttätig wirkende Anschlagvorrichtung (9,34) vorgesehen ist, welche nur in einem bestimmten Winkelbereich der Lenkrolle die vertikale Federbewegung der Lenkrolle (4) begrenzt.

2. Lenkrolle nach Anspruch 1, dadurch gekennzeichnet, dass die Anschlageinrichtung eine an dem mit dem Fahrzeugkörper (2) verbundenen festen Teil der Lenkrolle (4) angeordnete den rückseitigen Bereich des schwenkbaren Teils einer in der Fahrtrichtung vorne liegenden Lenkrolle (4) abdeckende Anschlagplatte (9) und einen auf der Rückseite des in die Fahrtrichtung eingeschwenkten schwenkbaren Teils der Lenkrolle (4) angeordneten senkrecht auf- und abbewegbaren durch eine an einem durch ein Federpaket (24) in einer Gleichgewichtslage gehaltenen Kippbügel (13) vorstehende Betätigungsnase (17.1) betätigbaren Anschlagschieber (34) aufweist.

3. Lenkrolle nach Anspruch 2, dadurch gekennzeichnet, dass der Anschlagschieber (34) mindestens einen durch mindestens eine Schraube (32) getragene Gleit- und Distanzbüchse (33) gleitend geführten Führungsschlitz (34.1) aufweist.

4. Lenkrolle nach Anspruch 2, dadurch gekennzeichnet, dass der Anschlagschieber (34) eine horizontale obere Anschlagfläche (34.2) und zwei an diese anschliessende, symmetrisch angeordnete, die Einfederung in Abhängigkeit der Winkellage der Lenkrolle (4) beeinflussende, geneigte Anschlagflächen (34.3) aufweist.

5. Fahrzeug, insbesondere fahrerlos geführtes Flurförderfahrzeug, mit Lenkrolle, nach einem der vorangehenden Ansprüche, dadurch gekennzeichnet, dass in Fahrtrichtung vorne und hinten je mindestens eine solche Lenkrolle vorgesehen ist.

6. Fahrzeug nach Anspruch 5, dadurch gekennzeichnet, dass bei Geradeausfahrt bei der in Fahrtrichtung vorne liegenden Lenkrolle die Anschlagplatte (9) mit der horizontalen Oberfläche (34.2) des Anschlagschiebers (34) zusammenwirkt und so den Federweg der Lenkrolle auf einen Minimalwert begrenzt, während gleichzeitig bei der in Fahrtrichtung hinten liegenden Lenkrolle die Anschlagplatte (9) und der Anschlagschieber (34) nicht zusammenwirken, so dass der Federweg dieser Lenkrolle durch die Anschlagvorrichtung nicht begrenzt wird.

7. Fahrzeug nach Anspruch 5 oder 6, dadurch gekennzeichnet, dass bei Kurvenfahrt ein Bereich existiert, in welchem bei einer oder mehreren Lenkrollen die Anschlagplatte (9) mit der geneigten Anschlagfläche (34.3) zusammenwirkt und so den Federweg dieser Lenkrolle teilweise begrenzt.

8. Fahrzeug nach Anspruch 5, 6 oder 7, dadurch gekennzeichnet, dass dieses auf einer quer zur Fahrtrichtung liegenden Achse zwei Antriebsräder aufweist und dass auf der parallel zur Fahrtrichtung liegenden Mittelachse vorn und hinten je eine Lenkrolle vorgesehen ist.

## Revendications

1. Roue de guidage (4), placée dans le sens de la marche à l'avant ou à l'arrière d'un véhicule, en particulier d'un convoyeur au sol guidé sans conducteur, de manière qu'elle puisse pivoter autour d'un axe vertical (6), sa position angulaire dépendant du sens de marche du véhicule (1), caractérisé en ce qu'un dispositif de butée automatique (9, 34) es prévu sur la roue de guidage, pour limiter le mouvement élastique vertical de la roue de guidage (4) uniquement dans une plage angulaire déterminée.

2. Roue de guidage suivant la revendication 1, caractérisée en ce que le dispositif de butée se compose d'une plaque butée (9) disposée sur la partie fixe de la roue de guidage, reliée au corps de véhicule (2), et au-dessus de la zone arrière de la partie pivotante d'une roue de guidage avant, vue dans le sens de la marche, et d'une palette de butée (34), montée sur l'arrière de la partie pivotante de la roue de guidage (4), orientée dans le sens de la marche, qui peut monter et descendre verticalement et être actionnée au moyen d'un talon d'actionnement (17.1) en saillie sur une fourche basculante (13) tenue en position d'équilibre par un bloc-ressort (24).

3. Roue de guidage suivant la revendication 2, caractérisé en ce que la palette de butée (34) présente au moins une fente de guidage (34.1) guidée de façon déplaçable par une rondelle de guidage et d'écartement (33), portée par au moins une vice (32).

4. Roue de guidage suivant la revendication 2, caractérisée en ce que la palette de butée (34) présente une surface supérieure horizontale de butée (34.2), et deux surfaces de butée inclinées (34.3) contigués à cette dernière, disposées symétriquement, qui influencent la compression du ressort en fonction de la position angulaire de la roue de guidage (4).

5. Véhicule, en particulier convoyeur au sol guidé sans conducteur, comportant une roue de guidage suivant une des revendications précédentes, caractérisé en ce qu'au moins une roue de guidage de ce genre est prévue à l'avant et à l'arrière dans le sens de la marche.

6. Véhicule suivant la revendication 5, caractérisé en ce qu'en cas de marche avant rectiligne, où la roue de guidage se trouve à l'avant dans le sens de la marche, la plaque de butée (9) coopère avec la surface horizontale (34.2) de la palette de butée (34) et limite ainsi le débattement de la roue de guidage à une valeur minimale, alors que simultanément la plaque de butée (9) de la roue de guidage se trouvant à l'arrière dans le sens de la marche et la palette de butée (34) ne coopèrent pas, le débattement de cette roue de guidage n'étant pas limitée par le dispositif de butée.

7. Véhicule suivant la revendication 5 ou 6, caractérisé en ce qu'en cas de marche en virage, il existe une zone, où, pour une ou plusieurs roues de guidage, la plaque de butée (9) coopère avec la surface de butée inclinée (34.3) de la palette de butée (34) et limite ainsi partiellement le débattement de cette roue de guidage.

8. Véhicule suivant la revendication 5, 6 ou 7, caractérisé en ce que celui-ci présente sur un axe transversal par rapport au sens de marche, deux roues motrices et qu'une roue de guidage est prévue à l'avant et l'arrière sur l'axe médian parallèle au sens de marche.

**Claims**

1. Resilient caster roll (4), arranged at a vehicle (1), especially at a driverless guided industrial conveying vehicle, at the front and rear side thereof relative to its driving direction, which is supported to be pivotable about a vertical axis (6), wherein its angular position is dependant of the direction of travel of the vehicle (1), characterized in that a self-acting abutment device (9, 34) is provided at the caster roll (4), which limits the vertical spring stroke of the caster roll (4) only in a defined range of the angular position of the caster roll.

2. Caster roll according to claim 1, characterized in that the abutment device comprises a stop plate (9) arranged at the fixed part of the caster roll (4) mounted to the vehicle body (2) and covering the rear area of the pivotable part of a caster roll (4) arranged at the front side relative to the driving direction as well as a sliding stop (34) actuatable by an actuation nose (17.1) protruding from a lever arm (13) arranged at the rear side of the pivotable part of the caster roll (4), when pivoted into the direction of travel, which lever arm is vertically upwardly and downwardly movable and is held in an equilibrium position by a spring pile (24).

3. Caster roll according to claim 2, characterized in that the sliding stop (34) comprises at least a guide slot (34.1) slidingly guided by at least a sliding and spacer sleeve (33) carried by at least a screw (32).

4. Caster roll according to claim 2, characterized in that the sliding stop (34) comprises a horizontal upper stop surface (34.2) and two adjoining symmetrically arranged inclined stop surfaces (34.3), influencing the stroke in dependance of the angular position of the caster roll (4).

5. Vehicle, especially driverless guided industrial conveying vehicle, with caster roll according to one of the preceding claims, characterized in that at least one caster roll is provided at the front and the rear side thereof, respectively, relative to its driving direction.

6. Vehicle according to claim 5, characterized in that in straight travel the stop plate (9) at the caster roll situated at the front side relative to the travel direction cooperates with the horizontal surface (34.2) of the sliding stop (34) in order to limit the spring stroke to a minimal value, whereas simultaneously at the caster roll situated at the rear side relative to the travel direction the stopte (9) and the sliding stop (34) do not cooperate, so that the spring stroke of this caster roll is not limited by the abutement device.

7. Vehicle according to claim 5 or 6, characterized in that in curve travel there is a range, within which at one or several caster rolls the stop plate (9) cooperates with the inclined stop surface (34.3) of the sliding stop (34) in order to partly limit the spring stroke of this caster roll.

8. Vehicle according to claim 5,6 or 7 characterized in that it comprises two driving wheels situated on an axis extending transversely to the driving direction and in that on the center axis extending in parallel tc the driving direction there is a caster roll in front and in the rear, respectively.

# Fig.1

# Fig.2

# Fig.3

# Fig.4

# Fig.5